# EUROPEAN PATENT SPECIFICATION

(11) **EP 3 179 868 B1**
(45) Date of publication and mention of the grant of the patent: **31.10.2018**
(21) Application number: 15787042.9
(22) Date of filing: 17.08.2015
(51) Int. Cl.: A23L 15/00, A23L 33/00, A23C 9/20

(54) **LIPID COMPOSITION FOR IMPROVING BEHAVIOUR**
LIPIDZUSAMMENSETZUNG ZUR VERBESSERUNG DES VERHALTENS
COMPOSITION LIPIDIQUE POUR AMÉLIORER LE COMPORTEMENT

(30) Priority: 15.08.2014 EP 14181194
(43) Date of publication of application: 21.06.2017
(73) Proprietor: N.V. Nutricia, 2712 HM Zoetermeer (NL)
(72) Inventor: SCHIPPER, Anniek Lidewij, NL-3584 CT Utrecht (NL); VAN DER BEEK, Eline Marleen, NL-3584 CT Utrecht (NL); BARTKE, Nana, NL-3584 CT Utrecht (NL)
(74) Representative: Nederlandsch Octrooibureau
(86) International application number: PCT/NL2015/050580
(87) International publication number: WO 2016/024864

(56) References cited:
- WO-A2-2009/138680
- US-A1- 2004 022 922
- US-A1- 2008 003 330
- US-A1- 2011 206 743
- US-A1- 2011 294 757
- US-A1- 2013 096 087

## Description

### FIELD

The present invention relates to nutritional compositions for infants and young children, in particular infant formulae, which comprises specific lipid ingredients for improving specific aspects of behaviour, such as exploratory behaviour and novelty recognition.

### BACKGROUND

The nervous system, in particular the brain, plays an essential role in a mammal's life. For example cognitive, emotional, social, sensory, motoric and regulatory functions are mainly determined by the brain. In the western society more and more diseases, disorders and problems with a proper functioning of the brain are becoming recognised. Early nutrition administered during the specific period of infancy when rapid growth and development of the brain occurs, has an imprinting or programming effect and therefore has long term consequences on the brain function. Breast-fed infants score better on visual and developmental tests than do formula-fed infants and they have an improved neurodevelopment compared to formula fed infants. Also long term links have been reported between breast milk feeding and cognitive ability or neurological status later in life.

Breast-feeding is the preferred method of feeding infants. However, there are circumstances that make breast-feeding impossible or less desirable. In those cases infant formulae are a good alternative. The composition of modern infant formulae is adapted in such a way that it meets many of the special nutritional requirements of the fast growing and developing infant. Still further improvements can be made. Still it seems that improvements can be made towards the constitution of infant milk formulae.
Fat provides about half of the dietary energy and constitutes the major energy stores in the bodies of infants and young children. Presently, there is growing interest in the quality of the dietary lipid supply during infancy as a major determinant of growth, visual and neural development, and long-term health. For example, the presence of long chain polyunsaturated fatty acids (LC-PUFA), such as docosahexaenoic (DHA) and arachidonic acid (AA) in human milk often has been designated an important factor for improving the neurological effects, and nowadays infant formula almost always comprise such LC-PUFA.
More recent the role of dairy fat and polar lipids from milk has gained attention. WO 2009/051502 discloses the use of one or more complex lipids including gangliosides for maintaining or increasing cognitive development in a foetal, infant or child subject. WO2006/114790 discloses the use of mixture of polar lipids for improvement of cognitive development in infants or children. WO 2009/138680 disclosed the use of a dairy fat source and a vegetable fat source improvement of brain development, cognitive and behavioural functions in infants and small children. WO2008/005033 discloses infant formulas with gangliosides, phospholipids, sialic acid, docosahexaenoic acid and arachidonic acid for accelerating brain development, neural migration and cognitive development in infants. In all cases a direct diet effect was disclosed, and no longer term effects.

WO 2011/115476 and WO 2011/115491 disclose infant nutrition with lipid globules coated with milk phospholipids for use in improving the fatty acid composition of the membrane and of improvement of cognitive or behavioural performance.

### SUMMARY OF THE INVENTION

The inventors surprisingly found direct effects of the diet on novelty recognition and exploratory behaviour using a mouse model wherein a nutritional composition comprising of large lipid globules was administered early in life. Novel object recognition and exploratory behaviour was improved when compared to mice having consumed a nutritional composition with standard, small lipid globules. This is indicative for an increased novel object recognition, increased preference for novelty, increased attention for surroundings and/or increased exploratory behaviour and/or exploratory activity. Surprisingly the effects were even observed later in life after both groups of mice had been subjected to the same standard rodent chow in adulthood. No high fat, Western style diet was applied, so both groups of mice were healthy and lean. Surprisingly, the nutritional composition comprising large lipid globules lead to an improvement in these specific aspects of behaviour. These effects are regulated by specific complex structures of the cognitive brain, such as the cerebral cortex. Without being bound to a theory, it is believed that the nutritional composition comprising lipid globules as defined hereinbelow beneficially affects such complex structures of the brain.
The invention thus relates to a non-medical method for improving behaviour in a healthy human subject, comprising administering a nutritional composition comprising 5 - 50 wt% vegetable lipids based on dry weight of the composition to the subject, the nutritional composition comprising lipid globules having (i) a volume-weighted mode diameter above 1.0 micrometer and (ii) a diameter of 2 to 12 micrometer in an amount of at least 45 volume% based on total lipid, wherein improving behaviour is selected from (a) increasing novel object recognition; (b) increasing exploratory behaviour and/or exploratory activity.

### DETAILED DESCRIPTION

The present invention relates to a non-medical method for improving behaviour in a healthy human subject, comprising administering a nutritional composition comprising 5 - 50 wt% vegetable lipids based on dry weight of the composition to the subject, the nutritional composition comprising lipid globules having (i) a volume-weighted mode diameter above 1.0 micrometer and (ii) a diameter of 2 to 12 micrometer in an amount of at least 45 volume% based on total lipid, wherein improving behaviour is selected from (a) increasing novel object recognition; (b) increasing exploratory behaviour and/or exploratory activity. The method of the present invention is non-medical.

### Nutritional composition

The nutritional composition administered in the method according to the invention comprises a lipid component, comprising 5 - 50 wt% vegetable lipid based on total dry weight of the composition. The composition comprises lipid in the form of lipid globules. It is preferred that the nutritional composition according to the invention further comprises protein and digestible carbohydrates, more preferably also one or more further components selected from non-digestible carbohydrates, vitamins, minerals, nucleotides is comprised in the nutritional composition according to the invention.
The present composition is preferably particularly suitable for providing the daily nutritional requirements to a human with an age below 36 months, particularly an infant with the age below 24 months, even more preferably an infant with the age below 18 months, most preferably below 12 months of age. Hence, the nutritional composition is for feeding or is used for feeding a human subject. The present composition comprises a lipid, and preferably a protein and preferably a digestible carbohydrate component wherein the lipid component preferably provides 30 to 60 % of total calories, the protein component preferably provides 5 to 20%, more preferably 5 to 15 wt.%, of the total calories and the digestible carbohydrate component preferably provides 25 to 75% of the total calories. Preferably the present composition comprises a lipid component providing 35 to 50% of the total calories, a protein component provides 6 to 12% of the total calories and a digestible carbohydrate component provides 40 to 60% of the total calories. The amount of total calories is determined by the sum of calories derived from protein, lipids and digestible carbohydrates.
The nutritional composition is preferably an infant nutrition or infant food products, more preferably the nutritional composition is an infant formula composition. The present composition is not human breast milk, since the present composition comprises vegetable lipids. The nutritional composition of the invention preferably comprises further beneficial components according to international directives for infant formulae, preferably at least one selected from non-digestible carbohydrates, vitamins, minerals and nucleotides.
In one embodiment the composition is a powder suitable for making a liquid composition after reconstitution with an aqueous solution, preferably with water. Preferably the composition is a powder to be reconstituted with water. It was found that the size and the coating with polar lipids of the lipid globules remained the same after the drying step and subsequent reconstitution.
In order to meet the caloric requirements of the infant, the composition preferably comprises 50 to 200 kcal/100 ml liquid, more preferably 60 to 90 kcal/100 ml liquid, even more preferably 60 to 75 kcal/100 ml liquid. This caloric density ensures an optimal ratio between water and calorie consumption. The osmolarity of the present composition is preferably between 150 and 420 mOsmol/l, more preferably 260 to 320 mOsmol/l. The low osmolarity aims to reduce the gastrointestinal stress. Such stress can induce adipocyte formation.
Preferably the composition is in a liquid form, with a viscosity below 35 mPa.s, more preferably below 6 mPa.s as measured in a Brookfield viscometer at 20°C at a shear rate of 100 s⁻¹. Suitably, the composition is in a powdered from, which can be reconstituted with water to form a liquid, or in a liquid concentrate form, which should be diluted with water. When the composition is in a liquid form, the preferred volume administered on a daily basis is in the range of about 80 to 2500 ml, more preferably about 450 to 1000 ml per day.

### Lipid

The present composition comprises lipid. The lipid provides preferably 30 to 60 % of the total calories of the composition, more preferably providing 35 to 55% of the total calories, even more preferably providing 40 to 50% of the total calories. When in liquid form, e.g. as a ready-to-feed liquid, the composition preferably comprises 2.1 to 6.5 g lipid per 100 ml, more preferably 3.0 to 4.0 g per 100 ml. Based on dry weight the present composition preferably comprises 10 to 50 wt.%, more preferably 12.5 to 40 wt.% lipid, even more preferably 19 to 30 wt.% lipid. Lipids include polar lipids (such as phospholipids, glycolipids, sphingomyelin, and cholesterol), monoglycerides, diglycerides, triglycerides and free fatty acids. Preferably the composition comprises at least 75 wt. %, more preferably at least 85 wt.% triglycerides based on total lipids. The lipid of the present invention comprises vegetable lipids. The presence of vegetable lipids advantageously enables an optimal fatty acid profile, high in (poly)unsaturated fatty acids and/or more reminiscent to human milk fat. Using lipids from cow's milk alone, or other domestic mammals, does not provide an optimal fatty acid profile. Preferably the present composition comprises at least one, preferably at least two lipid sources selected from the group consisting of linseed oil (flaxseed oil), rape seed oil (such as colza oil, low erucic acid rape seed oil and canola oil), salvia oil, perilla oil, purslane oil, lingonberry oil, sea buckthorn oil, hemp oil, sunflower oil, high oleic sunflower oil, safflower oil, high oleic safflower oil, olive oil, black currant seed oil, echium oil, coconut oil, palm oil and palm kernel oil. Preferably the present composition comprises at least one, preferably at least two lipid sources selected from the group consisting of linseed oil, canola oil, coconut oil, sunflower oil and high oleic sunflower oil. Commercially available vegetable lipids are typically offered in the form a continuous oil phase. When in liquid form, e.g. as a ready-to-feed liquid, the composition preferably comprises 1.0 to 7.0 g, more preferably 2.1 to 6.5 g vegetable lipid per 100 ml, more preferably 3.0 to 4.0 g per 100 ml. Based on dry weight the present composition preferably comprises 5 to 50 wt.%, more preferably 10 to 40 wt.%, even more preferably 12.4 to 45 wt.%, vegetable lipid, even more preferably 19 to 30 wt.%. Preferably the composition comprises 40 to 100 wt% vegetable lipids based on total lipids, more preferably 50 to 100 wt%, even more preferably 70 to 99 wt%, even more preferably 75 to 97 wt.%. It is noted therefore that the present composition also may comprise non-vegetable lipids. Suitable and preferred non-vegetable lipids are further specified below.

According to the present invention, lipid is present in the composition in the form of lipid globules, emulsified in the aqueous phase. Preferably, the lipid globules comprise a core and a coating. The core typically comprises vegetable fat and preferably at least 90 wt% of the core is formed by triglycerides, more preferably the core essentially consists of triglycerides. Preferably, the coating comprises polar lipids, more preferably at least 30 wt%, even more preferably at least 50 wt%, even more preferably at least 75 wt%, most preferably at least 95 wt% of the coating is formed by polar lipids. Not all polar lipids that are preferably present in the composition need necessarily be comprised in the coating, but preferably a major part is. Preferably more than 30 wt%, even more preferably more than 50 wt%, more preferably more than 70 wt%, even more preferably more than 85 wt%, most preferably more than 95 wt% of the polar lipids that are present in the composition are comprised in the coating of lipid globules. Not all vegetable lipids that are present in the composition need necessarily be comprised in the core of lipid globules, but preferably a major part is, preferably more than 50 wt%, more preferably more than 70 wt%, even more preferably more than 85 wt%, even more preferably more than 95 wt%, most preferably more than 98 wt% of the vegetable lipids that are present in the composition are comprised in the core of lipid globules.

The size of the lipid globules used in the method of the invention is defined by a volume-weighted mode diameter above 1.0 µm, and by a size distribution in such a way that at least 45 volume% of the globules have a diameter between 2 and 12 µm. According to the method of the present invention, the globules have the volume-weighted mode diameter as defined herein and the size distribution as defined herein. The volume-weighted mode diameter of the lipid globules according to the invention is preferably above 3.0 µm, more preferably 4.0 µm or above, preferably between 1.0 and 10 µm, more preferably between 2.0 and 8.0 µm, even more preferably between 3.0 and 8.0 µm, most preferably between 4.0 µm and 8.0 µm. The size distribution of the lipid globules according to the invention is such that at least 45 volume %, preferably at least 55 volume %, even more preferably at least 65 volume %, even more preferably at least 75 volume % has a diameter between 2 and 12 µm. More preferably, at least 45 volume %, preferably at least 55 volume %, even more preferably at least 65 volume %, even more preferably at least 75 volume % of the lipid globules have a diameter between 2 and 10 µm. Even more preferably, at least 45 volume %, preferably at least 55 volume %, even more preferably at least 65 volume %, even more preferably at least 75 volume % of the lipid globules have a diameter between 4 and 10 µm.
The percentage of lipid globules is based on volume of total lipid. The mode diameter relates to the diameter which is the most present based on the volume of total lipid, or the peak value in a graphic representation, having on the *x*-as the diameter and on the *y*-as the volume (in %). The volume of the lipid globule and its size distribution can suitably be determined using a particle size analyzer such as a Mastersizer (Malvern Instruments, Malvern, UK), for example by the method described in Michalski et al, 2001, Lait 81: 787-796. Methods to prepare such lipid globules are known in the art, e.g. from WO 2011/115491.

The lipid fraction preferably comprises polar lipids. Polar lipids are amphipathic of nature and include glycerophospholipids, glycosphingolipids, sphingomyelin and/or cholesterol. More preferably the composition comprises phospholipids (the sum of glycerophospholipids and sphingomyelin). Polar lipids in the present invention relate to the sum of glycerophospholipids, glycosphingolipids, sphingomyelin and cholesterol. According to the present invention, polar lipids are preferably present as a coating of the lipid globule. In the context of the present invention, "coating" refers to the outer surface layer of the lipid globule. Thus, the polar lipids are preferably located on the surface of the lipid globule, whereas these polar lipids are virtually absent in the core of the lipid globule. The presence of polar lipids as a coating or outer layer of the lipid globule in the diet administered early in life was found to advantageously result in improving behaviour.

The present composition preferably comprises glycerophospholipids. Glycerophospholipids are a class of lipids formed from fatty acids esterified at the hydroxyl groups on carbon-1 and carbon-2 of the backbone glycerol moiety and a negatively-charged phosphate group attached to carbon-3 of the glycerol via an ester bond, and optionally a choline group (in case of phosphatidylcholine, PC), a serine group (in case of phosphatidylserine, PS), an ethanolamine group (in case of phosphatidylethanolamine, PE), an inositol group (in case of phosphatidylinositol, PI) or a glycerol group (in case of phosphatidylglycerol, PG) attached to the phosphate group. Lysophospholipids are a class of phospholipids with one fatty acyl chain. Preferably the present composition contains PC, PS, PI and/or PE, more preferably at least PC.

The present composition preferably comprises phosphospingolipids, preferably sphingomyelin. Sphingomyelins have a phosphorylcholine or phosphorylethanolamine molecule esterified to the 1-hydroxy group of a ceramide. They are classified as phospholipid as well as sphingolipid, but are not classified as a glycerophospholipid nor as a glycosphingolipid.

The present composition preferably comprises glycosphingolipids. The term glycosphingolipids as in the present invention particularly refers to glycolipids with an amino alcohol sphingosine. The sphingosine backbone is O-linked to a charged headgroup such as ethanolamine, serine or choline backbone. The backbone is also amide linked to a fatty acyl group. Glycosphingolipids are ceramides with one or more sugar residues joined in a β-glycosidic linkage at the 1-hydroxyl position. Preferably the present composition contains gangliosides, more preferably at least one ganglioside selected from the group consisting of GM3 and GD3.

Sphingolipids are in the present invention defined as the sum of sphingomyelin and glycosphingolipids. Phospholipids are in the present invention defined as the sum of sphingomyelin and glycerophospholipids. Preferably, the phospholipids are derived from milk lipids. Preferably the weight ratio of phospholipids : glycosphingolipids is from 2:1 to 10:1, more preferably 2:1 to 5:1.
Preferably the present composition further comprises phospholipids and preferably the composition comprises lipid globules with a core comprising the vegetable lipids and a coating comprising said phospholipids. Preferably the present composition comprises 0.5 to 20 wt.% phospholipids based on total lipid, more preferably 0.5 to 10 wt.%, more preferably 1 to 10 wt.%, even more preferably 1 to 5 wt.%, even more preferably 2 to 10 wt.% even more preferably 2 to 5 wt.%, even more preferably 0.5 to 5 wt.% and even more preferably 1 to 3 wt.% phospholipids based on total lipid. Preferably the present composition comprises 0.1 to 10 wt.% glycosphingolipids based on total lipid, more preferably 0.5 to 5 wt.%, even more preferably 2 to 4 wt%. Preferably the present composition comprises 0.5 to 10 wt.% (glycosphingolipids plus phospholipids) based on total lipid, more preferably 1.0 to 10 wt.% (glycosphingolipids plus phospholipids), more preferably 0.5 to 6 wt.% (glycosphingolipids plus phospholipids), more preferably 0.5 to 3.5 wt.% (glycosphingolipids plus phospholipids), more preferably 1.0 to 6 wt.% (glycosphingolipids plus phospholipids), more preferably 1.0 to 3.5 wt.%
(glycosphingolipids plus phospholipids) based on total lipid. Preferably the present composition comprises 0.03 to 3 wt.% sphingomyelin based on total lipid, more preferably 0.1 to 2 wt.%, even more preferably 0.5 to 1 wt%. Preferably, the phospholipids comprise at least 5 wt% sphingomyelin based on total phospholipids, more preferably 10 - 50 wt.%, sphingomyelin based on total phospholipids.

The present composition preferably further comprises cholesterol. The present composition preferably comprises at least 0.005 wt.% cholesterol based on total lipid, more preferably at least 0.02 wt.%, more preferably at least 0.05 wt.%., even more preferably at least 0.1 wt.%. Preferably the amount of cholesterol does not exceed 10 wt.% based on total lipid, more preferably does not exceed 5 wt.%, even more preferably does not exceed 1 wt.% of total lipid. Preferably the present composition comprises 0.6 to 25 wt.% polar lipids based on total lipid, wherein the polar lipids are the sum of phospholipids, glycosphingolipids, and cholesterol, more preferably 0.6 to 12 wt.%, more preferably 1 to 10 wt.%, even more preferably 2 to 10 wt%, even more preferably 3.0 to 10 wt.% polar lipids based on total lipid, wherein the polar lipids are the sum of phospholipids, glycosphingolipids, and cholesterol. Preferably, the composition comprises lipid globules with a core comprising the vegetable lipids and a coating comprising said polar lipids.
Thus in one embodiment, the present composition preferably comprises 0.5 to 20 wt.% phospholipids based on total lipid and/or 0.6 to 25 wt.% of polar lipids based on total lipids, wherein polar lipids are the sum of phospholipids, glycosphingolipids and cholesterol, and the composition comprises lipid globules with a core comprising the vegetable lipids and a coating comprising said phospholipids or polar lipids.

Preferred sources for providing the phospholipids, glycosphingolipids and/or cholesterol are milk fat, buttermilk fat and butter serum fat (such as beta serum fat). A preferred source for phospholipids, particularly PC, is soy lecithin and/or sunflower lecithin. The present composition preferably comprises phospholipids derived from milk. Preferably the present composition comprises phospholipids and glycosphingolipids derived from milk. Preferably also cholesterol is obtained from milk. Preferably the polar lipids are derived from milk. Polar lipids derived from milk include the polar lipids isolated from milk lipid, cream lipid, butter serum lipid (beta serum lipid), whey lipid, cheese lipid and/or buttermilk lipid. The buttermilk lipid is typically obtained during the manufacture of buttermilk. The butter serum lipid or beta serum lipid is typically obtained during the manufacture of anhydrous milk fat from butter. Preferably the phospholipids, glycosphingolipids and/or cholesterol are obtained from milk cream. The composition preferably comprises phospholipids, glycosphingolipids and/or cholesterol from milk of cows, mares, sheep, goats, buffalos, horses and camels. It is most preferred to use a lipid extract isolated from cow's milk. The use of polar lipids from milk fat advantageously comprises the polar lipids from milk fat globule membranes, which are more reminiscent to the situation in human milk. The polar lipids are typically located on the surface of the lipid globule, i.e. as a coating or outer layer. A suitable way to determine whether the polar lipids are located on the surface of the lipid globules is laser scanning microscopy (see e.g. example 1 of WO 2011/115491). The concomitant use of polar lipids derived from domestic animals milk and trigycerides derived from vegetable lipids therefore enables to manufacture coated lipid globules with a coating more similar to human milk, while at the same time providing an optimal fatty acid profile. Suitable commercially available sources for milk polar lipids are BAEF, SM2, SM3 and SM4 powder of Corman, Salibra of Glanbia, and LacProdan MFGM-10 or PL20 from Arla. Preferably the source of milk polar lipids comprises at least 4 wt.% phospholipids based on total lipid, more preferably 7 to 75 wt.%, most preferably 20 to 70 wt.% phospholipids based on total lipid. Preferably the weight ratio phospholipids to protein is above 0.10, more preferably above 0.20, even more preferably above 0.3. Preferably at least 25 wt.%, more preferably at least 40 wt.%, most preferably at least 75 wt.% of the polar lipids is derived from milk polar lipids.

The composition preferably comprises fatty acids. The term "fatty acids" refers to monoglycerides, diglycerides, triglycerides and free fatty acids. Preferably, at least triglycerides are present. When bound to a glyceride moiety, a fatty acid may also be referred to as a "fatty acyl chain". The fatty acids defined hereinbelow may be present bound to a glyceride moiety or in free form, preferably they are bound to a glyceride moiety, more preferably as a triglyceride. In this context, LA refers to linoleic acid and/or acyl chain (18:2 n6); ALA refers to α-linolenic acid and/or acyl chain (18:3 n3); LC-PUFA refers to long chain polyunsaturated fatty acids and/or acyl chains comprising at least 20 carbon atoms in the fatty acyl chain and with 2 or more unsaturated bonds; DHA refers to docosahexaenoic acid and/or acyl chain (22:6, n3); EPA refers to eicosapentaenoic acid and/or acyl chain (20:5 n3); ARA refers to arachidonic acid and/or acyl chain (20:4 n6); DPA refers to docosapentaenoic acid and/or acyl chain (22:5 n3). Medium chain fatty acids (MCFA) refer to fatty acids and/or acyl chains with a chain length of 6, 8 or 10 carbon atoms.

LA preferably is present in a sufficient amount in order to promote a healthy growth and development, yet in an amount as low as possible in view of an unwanted high n6/n3 ratio. The composition therefore preferably comprises less than 15 wt.% LA based on total fatty acids, preferably between 5 and 14.5 wt.%, more preferably between 6 and 10 wt.%. Preferably the composition comprises over 5 wt.% LA based on fatty acids. Preferably ALA is present in a sufficient amount to promote a healthy growth and development of the infant. The present composition therefore preferably comprises at least 1.0 wt.% ALA based on total fatty acids. Preferably the composition comprises at least 1.5 wt.% ALA based on total fatty acids, more preferably at least 2.0 wt.%. Preferably the composition comprises less than 10 wt.% ALA, more preferably less than 5.0 wt.% based on total fatty acids. The weight ratio LA/ALA should be well balanced ensuring a normal growth and development. Therefore, the present composition preferably comprises a weight ratio of LA/ALA between 2 and 15, more preferably between 2 and 7, more preferably between 4 and 7, more preferably between 3 and 6, even more preferably between 4 and 5.5, even more preferably between 4 and 5.

The present composition preferably comprises at least 3 wt.% MCFA based on total fatty acids, more preferably at least 10 wt.%, even more preferably 15 wt.%. The present composition advantageously comprises less than 50 wt.% MCFA based on total fatty acids, more preferably less than 40 wt.%, even more preferably less than 25 wt.%.

Preferably the present composition comprises n3 LC-PUFA. n3 LC-PUFAs have been associated with beneficial effects on brain functioning, including cognitive performance. More preferably, the present composition comprises EPA, DPA and/or DHA, even more preferably DHA. Since a low concentration of DHA, DPA and/or EPA is already effective and normal growth and development are important, the content of n3 LC-PUFA in the present composition, preferably does not exceed 15 wt.% of the total fatty acid content, preferably does not exceed 10 wt.%, even more preferably does not exceed 5 wt.%. Preferably the present composition comprises at least 0.2 wt.%, preferably at least 0.5 wt.%, more preferably at least 0.75 wt.%, n3 LC-PUFA of the total fatty acid content. In one embodiment the present composition preferably comprises DHA in an amount of 0.1 to 0.6 wt.% based on total fatty acid content.

As the group of n6 fatty acids, especially arachidonic acid (ARA) and LA as its precursor, counteracts the group of n3 fatty acids, especially DHA and EPA and ALA as their precursor, the present composition comprises relatively low amounts of ARA. The n6 LC-PUFA content preferably does not exceed 5 wt.%, more preferably does not exceed 2.0 wt.%, more preferably does not exceed 0.75 wt.%, even more preferably does not exceed 0.5 wt.%, based on total fatty acids. Since ARA is important for optimal functional membranes in infants, the amount of n6 LC-PUFA is preferably at least 0.02 wt.% more preferably at least 0.05 wt.%, more preferably at least 0.1 wt.% based on total fatty acids, more preferably at least 0.2 wt.%. The presence of ARA is advantageous in a composition low in LA since it remedies LA deficiency. The presence of, preferably low amounts, of ARA is beneficial in nutrition to be administered to infants below the age of 6 months, since for these infants the infant formulae is generally the only source of nutrition. In one embodiment the present composition preferably comprises ARA in an amount of 0.1 to 0.6 wt.% based on total fatty acid content.

The lipid fraction includes at least vegetable lipid as lipid source. In addition, a lipid source selected from fish oil (preferably tuna fish oil) and single cell oil (such as algal, microbial oil and fungal oil) is present. These sources of oil are suitable as LC-PUFA sources. Preferably as a source of n3 LC-PUFA single cell oil, including algal oil and microbial oil, is used, since these oil sources have an advantageous EPA/DHA ratio. More preferably fish oil (even more preferably tuna fish oil) is used as a source of n3 LC-PUFA since fish oil has a higher EPA concentration. Thus in one embodiment the present composition further comprises at least one lipid selected from the group consisting of fish oil, marine oil, algal oil, fungal oil and microbial oil.
Also preferred is to include milk lipid as lipid source, as milk lipid comprises many of components that have been found beneficial for infant development. Also, milk lipid is a rich source in polar lipids, which are beneficially present in the composition according to the invention. Milk lipid includes cream lipid, butter serum lipid (beta serum lipid), whey lipid, cheese lipid, buttermilk lipid, anhydrous milk fat and butter oil. Thus in one embodiment the present composition further comprises at least one lipid selected from the group consisting of cream lipid, butter serum lipid (beta serum lipid), whey lipid, cheese lipid, buttermilk lipid, anhydrous milk fat and butter oil.

### Protein

The present composition preferably comprises proteins. The protein component preferably provides 5 to 15% of the total calories. Preferably the present composition comprises a protein component that provides 6 to 12% of the total calories. More preferably protein is present in the composition below 9% based on calories, more preferably the composition comprises between 7.2 and 8.0% protein based on total calories, even more preferably between 7.3 and 7.7% based on total calories. The protein concentration in a nutritional composition is determined by the sum of protein, peptides and free amino acids. Based on dry weight the composition preferably comprises less than 12 wt.% protein, more preferably between 9.6 to 12 wt.%, even more preferably 10 to 11 wt.%. Based on a ready-to-drink liquid product the composition preferably comprises less than 1.5 g protein per 100 ml, more preferably between 1.2 and 1.5 g, even more preferably between 1.25 and 1.35 g.
The source of the protein should be selected in such a way that the minimum requirements for essential amino acid content are met and satisfactory growth is ensured. Hence protein sources based on cows' milk proteins such as whey, casein and mixtures thereof and proteins based on soy, potato or pea are preferred. In case whey proteins are used, the protein source is preferably based on acid whey or sweet whey, whey protein isolate or mixtures thereof and may include α-lactalbumin and β-lactoglobulin. More preferably, the protein source is based on acid whey or sweet whey from which caseino-glyco-macropeptide (CGMP) has been removed. Removal of CGMP from sweet whey protein advantageously reduces the threonine content of the sweet whey protein. A reduced threonine content is also advantageously achieved by using acid whey. Optionally the protein source may be supplemented with free amino acids, such as methionine, histidine, tyrosine, arginine and/or tryptophan in order to improve the amino acid profile. Preferably α-lactalbumin enriched whey protein is used in order to optimize the amino acid profile. Using protein sources with an optimized amino acid profile closer to that of human breast milk enables all essential amino acids to be provided at reduced protein concentration, below 9 % based on calories, preferably between 7.2 and 8.0% based on calories and still ensure a satisfactory growth. If sweet whey from which CGMP has been removed is used as the protein source, it is preferably supplemented by free arginine in an amount of from 0.1 to 3 wt.% and/or free histidine in an amount of from 0.1 to 1.5 wt.% based on total protein.
Preferably the composition comprises at least 3 wt.% casein based on dry weight. Preferably the casein is intact and/or non-hydrolyzed.

### Digestible carbohydrates

The composition preferably comprises digestible carbohydrate. The digestible carbohydrate preferably provides 30 to 80% of the total calories of the composition. Preferably the digestible carbohydrate provides 40 to 60% of the total calories. When in liquid form, e.g. as a ready-to-feed liquid, the composition preferably comprises 3.0 to 30 g digestible carbohydrate per 100 ml, more preferably 6.0 to 20, even more preferably 7.0 to 10.0 g per 100 ml. Based on dry weight the present composition preferably comprises 20 to 80 wt.%, more preferably 40 to 65 wt.% digestible carbohydrates.
Preferred digestible carbohydrate sources are lactose, glucose, sucrose, fructose, galactose, maltose, starch and maltodextrin. Lactose is the main digestible carbohydrate present in human milk, and is thus preferably comprised in the present composition. The present composition preferably comprises digestible carbohydrate, wherein at least 35 wt.%, more preferably at least 50 wt.%, more preferably at least 75 wt.%, even more preferably at least 90 wt.%, most preferably at least 95 wt.% of the digestible carbohydrate is lactose. Based on dry weight the present composition preferably comprises at least 25 wt.% lactose, preferably at least 40 wt.%.

### Non-digestible carbohydrates

Preferably the present composition comprises non-digestible carbohydrates, more preferably non-digestible oligosaccharides with a degree of polymerization (DP) between 2 and 250, more preferably 3 and 60. These non-digestible oligosaccharides advantageously improve intestinal microbiota.
The non-digestible oligosaccharide is preferably selected from the group consisting of fructo-oligosaccharides (such as inulin), galacto-oligosaccharides (such as transgalacto-oligosaccharides or beta-galacto-oligisaccharides), gluco-oligosaccharides (such as gentio-, nigero- and cyclodextrin-oligosaccharides), arabino-oligosaccharides, mannan-oligosaccharides, xylo-oligosaccharides, fuco-oligosaccharides, arabinogalacto-oligosaccharides, glucomanno-oligosaccharides, galactomanno-oligosaccharides, sialic acid comprising oligosaccharides and uronic acid oligosaccharides. Preferably the composition comprises gum acacia on combination with a non-digestible oligosaccharide.
Preferably the present composition comprises fructo-oligosaccharides, galacto-oligosaccharides and/or galacturonic acid oligosaccharides, more preferably galacto-oligosaccharides, most preferably transgalacto-oligosaccharides. In a preferred embodiment the composition comprises a mixture of transgalacto-oligosaccharides and fructo-oligosaccharides. Preferably the present composition comprises galacto-oligosaccharides with a DP of 2-10 and/or fructo-oligosaccharides with a DP of 2-60. The galacto-oligosaccharide is preferably selected from the group consisting of transgalacto-oligosaccharides, lacto-N-tetraose (LNT), lacto-N-neotetraose (neo-LNT), fucosyl-lactose, fucosylated LNT and fucosylated neo-LNT. In a particularly preferred embodiment the present method comprises the administration of transgalacto-oligosaccharides ([galactose]ₙ-glucose; wherein n is an integer between 1 and 60, i.e. 2, 3, 4, 5, 6, ..., 59 ,60; preferably n is selected from 2, 3, 4, 5, 6, 7, 8, 9, or 10). Transgalacto-oligosaccharides (TOS) are for example sold under the trademark Vivinal™ (Borculo Domo Ingredients, Netherlands). Preferably the saccharides of the transgalacto-oligosaccharides are β-linked.
Fructo-oligosaccharide is a non-digestible oligosaccharide comprising a chain of β linked fructose units with a DP or average DP of 2 to 250, more preferably 10 to 100. Fructo-oligosaccharide includes inulin, levan and/or a mixed type of polyfructan. An especially preferred fructo-oligosaccharide is inulin. Fructo-oligosaccharide suitable for use in the compositions is also already commercially available, e.g. Raftiline®HP (Orafti).
Uronic acid oligosaccharides are preferably obtained from pectin degradation. Uronic acid oligosaccharides are preferably galacturonic acid oligosaccharides. Hence the present composition preferably comprises a pectin degradation product with a DP between 2 and 100. Preferably the pectin degradation product is prepared from apple pectin, beet pectin and/or citrus pectin. Preferably the composition comprises transgalacto-oligosaccharide, fructo-oligosaccharide and a pectin degradation product. The weight ratio transgalacto-oligosaccharide : fructo-oligosaccharide : pectin degradation product is preferably (20 to 2) : 1 : (1 to 3), more preferably (12 to 7) : 1 : (1 to 2).

Preferably, the composition comprises of 80 mg to 2 g non-digestible oligosaccharides per 100 ml, more preferably 150 mg to 1.50 g, even more preferably 300 mg to 1 g per 100 ml. Based on dry weight, the composition preferably comprises 0.25 wt.% to 20 wt.%, more preferably 0.5 wt.% to 10 wt.%, even more preferably 1.5 wt.% to 7.5 wt.%. A lower amount of non-digestible oligosaccharides will be less effective in providing a beneficial prebiotic effect, whereas a too high amount will result in side-effects of bloating and abdominal discomfort.

### Target group

In the context of the present invention, the nutritional composition is to be administered to a human subject. Preferably, said human subject is an infant of toddler, more preferably an infant. The present composition is preferably administered orally. The present composition is preferably administered to the human subject during the first 3 years of life, since at that age cognition and behaviour develops most significantly. In one embodiment of the use according to the present invention, the nutritional composition is for feeding or is used for feeding a human subject with an age between 0 and 36 months. The present composition is advantageously administered to a human of 0 - 24 months, more preferably to a human of 0 - 18 months, most preferably to a human of 0 - 12 months. In a preferred embodiment, the composition is to be used in healthy, non-obese subjects, preferably in healthy, lean subjects. According to the present invention, the composition is to be used in a healthy subject. In the context of the present invention, healthy means that the human subject is not diagnosed with autism, an autistic spectrum disorder or attention deficiency. Attention deficiency includes disorders like ADD and ADHD. Hence according to the present invention, the human subject is not diagnosed with at least one of autism, an autistic spectrum disorder and attention deficiency. Although the age of the human subject to which the present composition is administered is preferably from 0 - 36 months, the beneficial effects in terms of improving behaviour may prolong long after administration has halted, e.g. for the entire childhood or even up to adolescence or adulthood. The effect on improving behaviour may thus occur when the subject has an age of 0 - 25 years, preferably 3 months - 18 years, more preferably 6 months - 13 years, most preferably 12 months - 10 years. Within the context of the present inventions, effects that occur during and/or directly after the administration regime, i.e. the period during which the subject is administered with the nutritional composition according to the invention, are referred to as "direct" effects. On the other hand, effects that occur and/or prolong until after administration has halted, such as at least 3 months, preferably at least 6 months, more preferably 1 - 10 years, most preferably 2 - 5 years after termination of the administration regime, are referred to as "later-in-life" effects. In a particularly preferred embodiment, the composition is administered to a human subject of 0 - 36 months of age, and is for direct improving behaviour, i.e. at an age of 0 - 36 months. In an alternative particularly preferred embodiment, the composition is administered to a human subject of 0 - 36 months of age, and is for improving behaviour later-in-life, i.e. at an age above 36 months, preferably above 5 years or above 13 years or even above 18 years, such as 5 - 25 years, 5 - 18 years, 5 - 13 years, 13 - 25 years, 13 - 18 years or 18 - 25 years of age.

### Application

The inventors have surprisingly found that the structure of the lipid fraction, i.e. the presence of lipid globules of a certain size, has a marked effect on improving the behaviour. Surprisingly, these specific aspects of behaviour are improved when subjects are administered with the present composition. These specific aspects of behaviour include (a) increasing novel object recognition; (b) increasing the preference for novelty; (c) increasing the attention for surroundings; and/or (d) increasing exploratory behaviour and/or exploratory activity. It was found these aspects of behaviour were increased both direct, i.e. during the administration regime of the nutritional composition according to the invention, and later-in-life, i.e. the improved behaviour was observed after administration of the diet according to the invention had long halted. It will be understood that (a) increasing novel object recognition and (b) increasing the preference for novelty are highly interrelated, as well as (c) increasing the attention for surroundings and (d) increasing exploratory behaviour and/or exploratory activity are. The improved novelty index as shown in example 1 evidences that aspects (a) and (b) are indeed improved upon administration of the nutritional composition according to the invention. The improved exploration in the T-maze as shown in example 2 evidences that aspects (c) and (d) are indeed improved upon administration of the nutritional composition according to the invention. It should however be noted that novelty preference and recognition relies on the inherent exploratory behaviour of the subject, and that the T-maze spontaneous alteration test of example 2 requires novelty recognition. Thus, aspects (a) - (d) are intrinsically linked.

### EXAMPLES

### Example 1: Effect on novelty preference of a diet with different lipid globules.

Experimental groups were obtained from C57Bl/6J dams and housed in a controlled environment with ad libitum access to food and water unless specified otherwise. Breeding pairs were fed semi-synthetic diets (AIN93G; Research Diet Services, Wijk bij Duurstede, The Netherlands). At postnatal day (P) 2, litters were culled to 6 pups/dam and litters were randomly assigned at P16 to either of the two experimental diets containing a control IMF (Control IMF) or the experimental IMF (Concept IMF). Male pups were weaned at P21 onto their respective diets and single housed. At P45 the mice were switched to a maintenance semi-synthetic rodent chow (AIN-93M) until dissection. From day 45 to day 101 all pups were ad libitum fed the same synthetic rodent chow diet (AIN-93M).
The experimental diets that were used for weaning were:
1) an infant milk formula (IMF) based control diet (IMF1). This diet comprised 283 g standard IMF per kg, with the standard lipid globule size. The mode based on volume was 0.42 µm. The volume % of lipid globules with a diameter between 2 and 12 µm was 32%. The rest of the diet was AIN-93G protein, carbohydrates and fibre. The amount of soy phospholipid (PL) was 0.13 wt% based on total fat.
2) an IMF based experimental diet with large lipid globules (IMF2). The mode based on volume was 4,72 µm. The volume % of lipid globules with a diameter between 2 and 12 µm was 62%. This diet comprised 283 g experimental IMF per kg. The IMF comprised 4 g phospholipid from buttermilk serum (Friesland Campina) per kg IMF. The amount of soy PL was 0.13 wt% based on total fat. The amount of milk PL was 1.49 wt% based on total fat, with 0.49 wt% sphingomyelin based on total fat. In total, diet 2 contained 30 wt% sphingomyelin, based on total phospholipids in diet 2. The amount of cholesterol was 0.03 wt% based on total fat. The rest of the diet (about 28 wt%) was AIN-93G protein, carbohydrates and fibre.
Diet 1 and 2 were identical, except for the lipid fraction, and consisted of 65 wt% carbohydrates (including 15% lactose), 18 % proteins, 7 % lipids, 5 % fibres and 5% vitamin/mineral mix. All lipid was derived from the IMF. The fatty acid composition was very similar between the diets. More information on the fat composition is given in Table 1.

**Table 1: Fat composition of experimental diets**

| | | | Diet 2 | Diet 1 |
|---|---|---|---|---|
| Total fat (g/kg rodent diet) | | | 69.6 | 69.6 |
| vegetable fat (g/kg rodent diet) | | | 66.1 | 68.1 |
| animal fat (g/kg rodent diet) | | | 3.46 | 1.55 |
| | milk fat | | 2.93 | 1.02 |
| | phospholipid | | 1.13 | 0.09 |
| | Cholesterol | | 0.022 | 0.005 |
| | Saturates | | 28.95 | 28.60 |
| | Monounsaturates | | 26.12 | 26.31 |
| | Polyunsaturates | | 11.28 | 11.44 |
| | LA | | 9.096 | 9.270 |
| | ALA | | 1.674 | 1.711 |
| | AA | | 0.243 | 0.232 |
| | DHA | | 0.134 | 0.133 |
| | total n6 | | 9.39 | 9.54 |
| | total n3 | | 1.86 | 1.88 |

The male mice were subjected to a novel object test at postnatal day 35 (during adolescence stage) and at postnatal day 78 (early adulthood). This test is widely used in the art of behavioural neuroscience, and is a behavioural procedure to study preference for novelty, measures of recognition and attention.
The novel object test consisted of three sessions. In the first session the animals were habituated to a square test area (50*50 cm) in which 2 identical objects were present. Animals were allowed to explore the objects for 5 minutes and moved back to their home cage thereafter. After 2 hours, animals were subjected to another habituation to the test area and objects, in which the same objects were present but now one of the objects was placed at a different location than during the initial trial. Again, animals were allowed to explore the objects for 5 minutes and moved to their home cage thereafter. After 2 hours, mice were placed for a third time in the area in which now one of the objects was replaced by an unfamiliar object (novel object), and mice were allowed to explore the objects for 2 minutes. The time that was spent exploring the objects was measured and a preference index for novel object was calculated by the formula (exploration time new object - exploration time familiar object)/(total time explored objects). The results are shown in Table 2. Measures of activity (cm moved and velocity) were not different between diet groups during the novel object recognition test

**Table 2: preference index for novel object in mice weaned on chow with different fat composition**

| Early diet (day 16-45) | Postnatal day 35 | Postnatal day 78 |
|---|---|---|
| IMF 1 (control) | -0.038 ± 0,203 | 0.05 ± 0,157 |
| IMF 2 (experimental) | 0.329 ± 0,215 | 0.475 ± 0,116* |

| | | |
|---|---|---|
| * p<0.05 compared to IMF1 (one way ANOVA) | | |

As can be deduced from table 2, at day 35 preference of novelty is increased in mice consuming the diet with the experimental fat composition. Interestingly at day 78, at adulthood when both groups of mice have consumed the same standard chow diet for 33 days, the preference for novelty is increased statistically significantly in the experimental diet group compared to the control diet group, which indicates that the effects of the experimental fat composition on preference to novelty are persistent into adulthood, when the experimental diet was administered during infancy.
This increased preference for novelty is also indicative for increased novel object recognition.

### Example 2: Effect on exploration of a diet with different lipid globules

In the same experiment as described under example 1, mice were subjected to the T Maze Spontaneous Alternation test on postnatal day 36/37 (adolescence phase). The T Maze Spontaneous Alternation test is a well-known behavioural test for measuring exploratory behaviour in rodents.
The T maze consisted of an elevated T-shaped area (placed horizontally). Mice were placed at the base of the T and were allowed to choose one of the two arms of the T for exploration. Immediately after this, mice were placed at the base of the T maze again and again were allowed to choose one of the two arms of the T for exploration. Animals that now chose the other arm for exploration compared to the first trial (spontaneous alternation) have a high willingness to explore a new environment, i.e. they prefer to visit a new arm of the maze rather than a familiar arm. The procedure was repeated six times in total over two days, and the % of alternation index was calculated over all sessions. The results are shown in table 3.

**Table 3: Percent alternation in mice weaned on chow with different fat composition**

| Early diet (day 16-45) | Postnatal day 36/37 |
|---|---|
| IMF 1 (control) | 74.36 ± 4,85 |
| IMF 2 (experimental) | 86.90 ± 3,11* |

| | |
|---|---|
| * p<0.05 compared to IMF1 (one way ANOVA) | |

As can be seen in table 3, the percentage of alternation, indicative of preference for exploration of a novel environment, is significantly increased at day at day 36/37 in adolescent mice consuming the fat composition of the present invention.
This increased exploration behaviour is also indicative for increased attention for surroundings.

It is noted the observed effects in these examples are not particularly of benefit in individuals diagnosed with ADHD or ADD. Although ADHD/ADD symptoms may include high novelty seeking and inattention, low/normal novelty seeking is not. The present experiments show an improvement in novelty seeking, however, an improvement for ADHD/ADD by diet would be a reduction in novelty seeking and inattention.

Likewise, the results obtained are not indicative for establishing a beneficial effect in individuals diagnosed with autism or an autistic spectrum disorder. Autistic spectrum disorder symptoms typically are impaired social interactions, impaired verbal social communication, and higher level of repetitive behaviours. The present experiments are directed at alterations in spatial surroundings, not in alterations of possibilities for social interactions.

## Claims

1. A non-medical method for improving behaviour in a healthy human subject, comprising administering a nutritional composition comprising 5 - 50 wt% vegetable lipids based on dry weight of the composition to the subject, the nutritional composition comprising lipid globules having:
i) a volume-weighted mode diameter above 1.0 micrometer, and
ii) a diameter of 2 to 12 micrometer in an amount of at least 45 volume% based on total lipid,
wherein improving behaviour is selected from:
a) increasing novel object recognition; and
b) increasing exploratory behaviour and/or exploratory activity.

2. The non-medical method according to claim 1 wherein the composition further comprises 0.5 - 10 wt.% phospholipids based on total lipid.

3. The non-medical method according to claim 2 wherein the phospholipids are derived from the milk fat globule membrane.

4. The non-medical method according to claim 2 or 3 wherein the phospholipids comprise at least 5 wt% sphingomyelin based on total phospholipids.

5. The non-medical method according to any one of claim 2 to 4, wherein the phospholipids are located at the surface of the lipid globule.

6. The non-medical method according to any one of the preceding claims, wherein the lipid globules have a volume-weighted mode diameter above 1.0 micrometer, preferably 2.0 - 8.0 micrometer.

7. The non-medical method according to any one of the preceding claims, wherein improving behaviour is by enhancing the effect of novelty induced arousal on (a) novel object recognition; (b) exploratory behaviour and/or exploratory activity.

8. The non-medical method according to any one of the preceding claims, wherein the nutritional composition further comprises protein and digestible carbohydrate and preferably at least one further component selected from non-digestible carbohydrates, vitamins, minerals, and nucleotides.

9. The non-medical method according to any one of the preceding claims, wherein the human subject to whom the nutritional composition is administered has an age of 36 months or below.

10. The non-medical method according to any one of the preceding claims, wherein the healthy human subject is a human subject that is not diagnosed with autism, an autistic spectrum disorder or attention deficiency.

11. The non-medical method according to any one of the preceding claims wherein the improving behaviour occurs when the human subject is above 36 months of age, preferably above 5 years of age.

12. The non-medical method according to any one of the preceding claims wherein the healthy human subject is a non-obese subject, preferably a lean subject.

## Patentansprüche

1. Nichtmedizinisches Verfahren zum Verbessern des Verhaltens bei einem gesunden menschlichen Probanden, umfassend das Verabreichen einer Nahrungszusammensetzung umfassend 5-50 Gew.-% pflanzliche Lipide, bezogen auf das Trockengewicht der Zusammensetzung, an den Probanden, wobei die Nahrungszusammensetzung Lipidkügelchen umfasst mit:
i) einem volumengewichteten Modus-Durchmesser (volume-weighted mode diameter) über 1,0 Mikrometer, und
ii) einem Durchmesser von 2 bis 12 Mikrometer in einer Menge von wenigstens 45 Vol.-%, bezogen auf das Gesamtlipid,
wobei das Verbessern des Verhaltens ausgewählt ist aus:
a) Steigern der Erkennung eines neuen Gegenstands; und
b) Steigern des Erkundungsverhaltens und/oder der Erkundungsaktivität.

2. Nichtmedizinisches Verfahren gemäß Anspruch 1, wobei die Zusammensetzung außerdem 0,5-10 Gew.-% Phospholipide, bezogen auf das Gesamtlipid, umfasst.

3. Nichtmedizinisches Verfahren gemäß Anspruch 2, wobei die Phospholipide von der Milchfettkügelchenmembran herrühren.

4. Nichtmedizinisches Verfahren gemäß Anspruch 2 oder 3, wobei die Phospholipide wenigstens 5 Gew.-% Sphingomyelin, bezogen auf die Gesamtphospholipide, umfassen.

5. Nichtmedizinisches Verfahren gemäß einem von Anspruch 2 bis 4, wobei sich die Phospholipide auf der Oberfläche des Lipidkügelchens befinden.

6. Nichtmedizinisches Verfahren gemäß einem der vorangehenden Ansprüche, wobei die Lipidkügelchen einen volumengewichteten Modus-Durchmesser über 1,0 Mikrometer, vorzugsweise 2,0-8,0 Mikrometer aufweisen.

7. Nichtmedizinisches Verfahren gemäß einem der vorangehenden Ansprüche, wobei das Verbessern des Verhaltens durch das Verstärken des Effekts der Neuheit-induzierten Erregung auf (a) die Erkennung eines neuen Gegenstands; (b) das Erkundungsverhalten und/oder die Erkundungsaktivität erfolgt.

8. Nichtmedizinisches Verfahren gemäß einem der vorangehenden Ansprüche, wobei die Nahrungszusammensetzung außerdem Protein und verdauliches Kohlenhydrat und vorzugsweise wenigstens eine weitere Komponente, ausgewählt aus unverdaulichen Kohlenhydraten, Vitaminen, Mineralien und Nukleotiden, umfasst.

9. Nichtmedizinisches Verfahren gemäß einem der vorangehenden Ansprüche, wobei der menschliche Proband, dem die Nahrungszusammensetzung verabreicht wird, ein Alter von 36 Monaten oder weniger aufweist.

10. Nichtmedizinisches Verfahren gemäß einem der vorangehenden Ansprüche, wobei der gesunde menschliche Proband ein menschlicher Proband ist, bei dem kein Autismus, keine Störung des autistischen Spektrums oder Aufmerksamkeitsdefizit diagnostiziert wurde.

11. Nichtmedizinisches Verfahren gemäß einem der vorangehenden Ansprüche, wobei die Verbesserung des Verhaltens auftritt, wenn der menschliche Proband über 36 Monate, vorzugsweise über 5 Jahre alt ist.

12. Nichtmedizinisches Verfahren gemäß einem der vorangehenden Ansprüche, wobei der gesunde menschliche Proband ein nicht fettleibiger Proband, vorzugsweise ein magerer Proband ist.

## Revendications

1. Méthode non médicale pour améliorer le comportement chez un sujet humain en bonne santé, comprenant l'administration au sujet d'une composition nutritionnelle comprenant 5 à 50 % en poids de lipides végétaux sur la base du poids sec de la composition, la composition nutritionnelle comprenant des globules lipidiques ayant :
i) un diamètre de mode pondéré en volume supérieur à 1,0 micromètre, et
ii) un diamètre de 2 à 12 micromètres dans une quantité d'au moins 45 % en volume par rapport aux lipides totaux,
dans laquelle l'amélioration de comportement est choisie parmi :
a) augmenter la reconnaissance d'un nouvel objet ; et
b) augmenter le comportement exploratoire et/ou l'activité exploratoire.

2. Méthode non médicale selon la revendication 1, dans laquelle la composition comprend en outre de 0,5 à 10 % en poids de phospholipides sur la base des lipides totaux.

3. Méthode non médicale selon la revendication 2, dans laquelle les phospholipides sont dérivés de la membrane de globules gras du lait.

4. Méthode non médicale selon la revendication 2 ou 3, dans laquelle les phospholipides comprennent au moins 5 % en poids de sphingomyéline sur la base des phospholipides totaux.

5. Méthode non médicale selon l'une quelconque des revendications 2 à 4, dans laquelle les phospholipides sont situés à la surface du globule lipidique.

6. Méthode non médicale selon l'une quelconque des revendications précédentes, dans laquelle les globules lipidiques ont un diamètre modal pondéré en volume supérieur à 1,0 micromètre, de préférence de 2,0 à 8,0 micromètres.

7. Méthode non médicale selon l'une quelconque des revendications précédentes, dans laquelle l'amélioration du comportement consiste à renforcer l'effet d'excitation induite par la nouveauté sur (a) une reconnaissance d'un nouvel objet ; (b) un comportement exploratoire et/ou une activité exploratoire.

8. Procédé non médical selon l'une quelconque des revendications précédentes, dans laquelle la composition nutritionnelle comprend en outre des protéines et un hydrate de carbone digestibles, et de préférence au moins un autre composant choisi parmi des hydrates de carbone non digestibles, des vitamines, des minéraux et des nucléotides.

9. Méthode non médicale selon l'une quelconque des revendications précédentes, dans laquelle le sujet humain auquel est administrée la composition nutritionnelle a un âge de 36 mois ou moins.

10. Méthode non médicale selon l'une quelconque des revendications précédentes, dans laquelle le sujet humain en bonne santé est un sujet humain qui n'est pas diagnostiqué comme atteint de l'autisme, d'un trouble du spectre autistique ou d'un déficit de l'attention.

11. Méthode non médicale selon l'une quelconque des revendications précédentes, dans laquelle le comportement d'amélioration survient lorsque le sujet humain a plus de 36 mois, de préférence plus de 5 ans.

12. Méthode non médicale selon l'une quelconque des revendications précédentes, dans lequel le sujet humain sain est un sujet non obèse, de préférence un sujet mince.
